# EUROPEAN PATENT APPLICATION

(11) **EP 4 770 068 A1**
(43) Date of publication of application: **01.07.2026**
(21) Application number: 25738500.5
(22) Date of filing: 09.01.2025
(51) Int. Cl.: H04M 1/72403

(54) **DISPLAY METHOD, ELECTRONIC DEVICE AND STORAGE MEDIUM**

(30) Priority: 10.01.2024 CN 202410041776
(71) Applicant: Honor Device Co., Ltd., Shenzhen, Guangdong 518040 (CN)
(72) Inventor: CHENG, Long, Shenzhen, Guangdong 518040 (CN)
(74) Representative: Isarpatent
(86) International application number: PCT/CN2025/071497
(87) International publication number: WO 2025/148971

(57) **Abstract**

Embodiments of this application provide a display method, an electronic device, and a storage medium. In this method, the electronic device determines target duration of a second adjustment period based on composition time-consumption of at least one display frame in a first adjustment period, so as to obtain a first interface image drawn by a target application in the second adjustment period, and determine an arrival moment of an expected TE signal of a first display frame corresponding to the first interface image, so as to determine a frame composition trigger moment corresponding to the first interface image based on the arrival moment of the expected TE signal and the target duration of the second adjustment period, composite the first display frame based on the first interface image at the frame composition trigger moment, and then display the first display frame. In this way, the electronic device can periodically adjust the target duration, thereby reducing a finger track delay in a process in which a user operates a screen, improving finger track, increasing smoothness of picture display, and improving user experience.

## Description

This application claims priority to Chinese Patent Application No. 202410041776.1, filed with the China National Intellectual Property Administration on January 10, 2024 and entitled "DISPLAY METHOD, ELECTRONIC DEVICE, AND STORAGE MEDIUM", which is incorporated herein by reference in its entirety.

### TECHNICAL FIELD

This application relates to the field of smart terminal technologies, and in particular, to a display method, an electronic device, and a storage medium.

### BACKGROUND

With advances in science and technology, performance of various terminal devices (such as a mobile phone) is becoming better and better, and users' requirements on the performance of various terminal devices are becoming higher and higher. For example, finger track has an important impact on user experience of a terminal device.

Finger track refers to performance of a terminal device to respond in time to a user operation when a user touches a screen. In a process of using the terminal device, the user needs to perform various operations on the terminal device, such as browsing a webpage, playing a game, and watching a video. When the user operates the screen of the terminal device in the process of using the terminal device, the terminal device can respond based on the user's operation.

Time-consumption generated by a process from the user performing an operation on the screen to an image corresponding to the user operation being displayed on the screen is referred to as a finger track delay. The lower the finger track delay is, the more in time the terminal device responds, the better the finger track is, and the smoother a picture is.

### SUMMARY

Embodiments of this application provide a display method, an electronic device, and a storage medium. In this method, the electronic device can periodically adjust a time interval between an image composition moment and an image display moment, thereby reducing a finger track delay in a process in which a user operates a screen, improving finger track, increasing smoothness of picture display, and improving user experience.

In a first aspect, an embodiment of this application provides a display method. The method includes the following steps: A target application in an electronic device draws at least one interface image in response to a movement of a target operation; the electronic device determines target duration of a second adjustment period based on composition time-consumption of at least one display frame in a first adjustment period; the electronic device obtains a first interface image drawn by the target application in the second adjustment period, and determines an arrival moment of an expected tearing effect TE signal of a first display frame corresponding to the first interface image; the electronic device determines a frame composition trigger moment corresponding to the first interface image based on the arrival moment of the expected TE signal of the first display frame and the target duration of the second adjustment period; the electronic device composites the first display frame based on the first interface image at the frame composition trigger moment corresponding to the first interface image; and the electronic device displays a plurality of display frames corresponding to the at least one interface image, and the plurality of display frames include the first display frame.

The second adjustment period may be a next adjustment period adjacent to the first adjustment period, and the target duration may be a time interval between a display trigger moment and a composition trigger moment of the display frame.

Specifically, at the composition trigger moment, a SurfaceFlinger can composite the display frame. At the display trigger moment, a display can display the composited display frame.

For example, the composition trigger moment may be a moment at which the SurfaceFlinger receives a VsyncSF signal. The display trigger moment may be an arrival moment of the TE signal in the display. The target duration may be a time interval between the VsyncSF signal and the TE signal, that is, a SF WorkDuration.

The target operation may be an operation that the user swipes the screen. The target application may be an application corresponding to the target operation. The composition time-consumption may be time-consumption generated by compositing a display frame. Specifically, the composition time-consumption may be determined by the SurfaceFlinger based on a composition start time and a composition end time of the display frame.

The first interface image may be one of a plurality of interface images drawn by the target application. The first display frame may be any one of display frames composited in the second adjustment period. The arrival moment of the expected TE signal may be a moment at which the display is expected to display the display frame. It may be understood that each display frame corresponds to an arrival moment of one expected TE signal. For example, a frame composition trigger moment may be a moment at which frame composition is triggered.

In this way, the electronic device can periodically and dynamically adjust target duration to reduce a finger track delay in a process in which the user operates the screen, thereby improving finger track, increasing smoothness of picture display, and improving user experience.

According to the first aspect, that the electronic device determines target duration of a second adjustment period based on composition time-consumption of at least one display frame in a first adjustment period may include: In the first adjustment period, the electronic device determines target composition time-consumption corresponding to the first adjustment period based on the composition time-consumption of the at least one display frame in the first adjustment period; after the first adjustment period ends, the electronic device determines preset idle time-consumption and determines a sum of the target composition time-consumption and the preset idle time-consumption as duration to be adjusted, so as to determine the target duration of the second adjustment period based on the duration to be adjusted.

The target composition time-consumption may be a target value of composition time-consumption in an adjustment period. For example, the target composition time-consumption may be composition time-consumption of any display frame that exceeds a time-consumption threshold, or may be an average value of composition time-consumption of a plurality of display frames that exceeds the time-consumption threshold, or may be a maximum time-consumption in composition time-consumption of display frames.

The preset idle time-consumption may be preset idle time-consumption after a display frame is composited.

In this way, the electronic device determines the target duration of the second adjustment period based on a sum of the target composition time-consumption corresponding to the first adjustment period and the preset idle time-consumption, so that dynamic adjustment of the target duration can be implemented.

According to the first aspect, or any implementation of the first aspect, that the electronic device determines target composition time-consumption corresponding to the first adjustment period based on the composition time-consumption of the at least one display frame in the first adjustment period may include: The electronic device sets the target composition time-consumption to an initial value at a start moment of the first adjustment period, and sequentially uses each display frame composited in the first adjustment period as a current display frame; and the electronic device obtains composition time-consumption of the current display frame, and updates a value of the target composition time-consumption to the composition time-consumption of the current display frame in a case that the composition time-consumption of the current display frame is greater than the target composition time-consumption.

For example, the initial value may be 0.

In this way, the electronic device determines the composition time-consumption of the current display frame that is greater than the target composition time-consumption as the target composition time-consumption corresponding to the first adjustment period, thereby being able to more accurately determine a maximum value of composition time-consumption in the first adjustment period.

According to the first aspect, or any implementation of the first aspect, that the electronic device determines the target duration of the second adjustment period based on the duration to be adjusted may include: The electronic device obtains first duration; and the electronic device determines the duration to be adjusted as the target duration of the second adjustment period in a case that the duration to be adjusted is greater than the first duration, or determines the first duration as the target duration of the second adjustment period in a case that the duration to be adjusted is less than the first duration.

The first duration may be preset minimum SF WorkDuration.

In this way, when the duration to be adjusted is less than the first duration, the electronic device determines the first duration as the target duration of the second adjustment period, so that a frame drop caused because the SF WorkDuration is too small can be avoided in the second adjustment period.

According to the first aspect, or any implementation of the first aspect, before the electronic device determines the target duration of the second adjustment period based on the composition time-consumption of the at least one display frame in the first adjustment period, the method further includes: The electronic device determines target duration of the first adjustment period; and
that the electronic device determines target duration of a second adjustment period based on composition time-consumption of at least one display frame in a first adjustment period may include: The electronic device determines the target duration of the second adjustment period based on the composition time-consumption of the at least one display frame in the first adjustment period in a case that composition time-consumption of all display frames composited in the first adjustment period is less than the target duration of the first adjustment period.

In this way, when composition time-consumption of all display frames in the first adjustment period is less than the target duration of the first adjustment period, the electronic device adjusts the target duration of the second adjustment period to implement periodic adjustment of the target duration.

According to the first aspect, or any implementation of the first aspect, the electronic device determines composition time-consumption of a second display frame in the first adjustment period; the electronic device determines target duration corresponding to a penalty period and starts timing of the penalty period in a case that the composition time-consumption of the second display frame is greater than the target duration of the first adjustment period; the electronic device obtains a third interface image drawn by the target application in the penalty period, and determines an arrival moment of an expected TE signal of a third display frame corresponding to the third interface image; the electronic device determines a frame composition trigger moment corresponding to the third interface image based on the arrival moment of the expected TE signal of the third display frame and the target duration corresponding to the penalty period, so as to composite the third display frame based on the third interface image at the frame composition trigger moment corresponding to the third interface image; and the electronic device determines a next adjustment period after the timing of the penalty period ends.

Target duration of the next adjustment period is second duration. The second duration may be an initial value corresponding to the preset SF WorkDuration. The next adjustment period may be a 1st adjustment period after the penalty period ends.

The second display frame may be a display frame corresponding to another interface image drawn by the target application. Specifically, the second display frame may be any one of display frames composited in the first adjustment period.

The third interface image may be another one of the plurality of interface images drawn by the target application. Specifically, the third display frame may be any one of display frames composited in the penalty period.

Specifically, the electronic device starts the timing of the penalty period in the case that the composition time-consumption of the second display frame is greater than the target duration of the first adjustment period. In this way, a start moment of the penalty period may be slightly later than a composition end moment of the second display frame. That is, a time interval between the start moment of the penalty period and the composition end moment of the second display frame may be less than a preset interval value. The preset interval value may be a very small interval value.

In this way, when the composition time-consumption of the second display frame is greater than the target duration of the first adjustment period, the electronic device determines the target duration corresponding to the penalty period, and can adjust the target duration in time when a frame drop occurs, thereby avoiding consecutive frame drops and improving user experience.

According to the first aspect, or any implementation of the first aspect, that the electronic device determines target duration corresponding to a penalty period includes: The electronic device determines the second duration as the target duration corresponding to the penalty period.

In this way, when a frame drop occurs, the electronic device can adjust the target duration to the second duration to avoid consecutive frame drops, thereby improving user experience.

According to the first aspect, or any implementation of the first aspect, the electronic device can determine a start moment of the penalty period as a composition end moment of the second display frame.

In this way, the electronic device can enter the penalty period in time when a frame drop occurs, thereby avoiding consecutive frame drops and improving user experience.

According to the first aspect, or any implementation of the first aspect, the electronic device can further determine a composition end moment of the third display frame and an end moment of the penalty period; and the electronic device determines the composition end moment of the third display frame as a start moment of the next adjustment period in a case that the composition end moment of the third display frame is later than the end moment of the penalty period.

Specifically, the end moment of the penalty period may be determined based on penalty duration of the penalty period and the start moment of the penalty period.

In this way, the electronic device can re-enter an adjustment period after the penalty period ends, so as to continue to dynamically adjust the target duration after the penalty period ends, thereby reducing a finger track delay in a process in which the user operates the screen and improving user experience.

According to the first aspect, or any implementation of the first aspect, that the electronic device determines target duration of the first adjustment period may include: The electronic device obtains second duration in a case that the first adjustment period is a 1st adjustment period, and determines the second duration as the target duration of the first adjustment period.

The 1st adjustment period can be a 1st adjustment period after the user's operation.

In this way, the electronic device can determine the second duration as the target duration of the 1st adjustment period.

According to the first aspect, or any implementation of the first aspect, the electronic device determines a composition end moment of a fourth display frame in the first adjustment period and an end moment of the first adjustment period, and determines the composition end moment of the fourth display frame as a start moment of the second adjustment period in a case that the composition end moment of the fourth display frame is later than the end moment of the first adjustment period.

The fourth display frame may be a display frame corresponding to another interface image drawn by the target application. Specifically, a composition start moment of the fourth display frame may be before or after the first adjustment period ends. If the composition start moment of the fourth display frame is after the first adjustment period ends, composition of the fourth display frame may be a first time of frame composition after the first adjustment period ends.

Specifically, the end moment of the first adjustment period may be determined based on period duration of the first adjustment period and the start moment of the first adjustment period.

In this way, the electronic device can determine the start moment of the second adjustment period, so as to enter the second adjustment period at the start moment of the second adjustment period, and then draw, composite, or display the display frames in the second adjustment period.

According to the first aspect, or any implementation of the first aspect, a frequency of a TE signal of the electronic device is greater than a screen refresh rate of the electronic device.

For example, the frequency of the TE signal may be 360 Hz, and the screen refresh rate may be 120 Hz.

In this way, the electronic device can display a frame to be displayed in a scenario of a high-frequency TE signal to avoid a frame drop, thereby increasing smoothness of picture display and improving user experience.

In a second aspect, an embodiment of this application provides an electronic device. The electronic device includes one or more processors; a memory; and one or more computer programs, the one or more computer programs are stored in the memory, and when the computer programs are executed by the one or more processors, the electronic device is enabled to perform the display method according to the first aspect and any implementation of the first aspect.

The second aspect and any implementation of the second aspect respectively correspond to the first aspect and any implementation of the first aspect. For technical effects corresponding to the second aspect and the any implementation of the second aspect, refer to technical effects corresponding to the first aspect and any implementation of the first aspect. Details are not described herein again.

In a third aspect, an embodiment of this application provides a computer-readable storage medium. The computer-readable storage medium includes a computer program, and when the computer program is run on an electronic device, the electronic device is enabled to perform the display method according to the first aspect and any implementation of the first aspect.

The third aspect and any implementation of the third aspect respectively correspond to the first aspect and any implementation of the first aspect. For technical effects corresponding to the third aspect and any implementation of the third aspect, refer to the technical effects corresponding to the first aspect and any implementation of the first aspect. Details are not described herein again.

In a fourth aspect, an embodiment of this application provides a computer program product, including a computer program. When the computer program is run, a computer is enabled to perform the display method according to the first aspect or any implementation of the first aspect.

The fourth aspect and any implementation of the fourth aspect respectively correspond to the first aspect and any implementation of the first aspect. For technical effects corresponding to the fourth aspect and any implementation of the fourth aspect, refer to technical effects corresponding to the first aspect and any implementation of the first aspect. Details are not described herein again.

In a fifth aspect, this application provides a chip, where the chip includes a processing circuit and a transceiver pin. The transceiver pin and the processing circuit communicate with each other by using an internal connection path, and the processing circuit performs the display method according to the first aspect or any implementation of the first aspect, to control a receive pin to receive a signal, and control a transmit pin to send a signal.

The fifth aspect and any implementation of the fifth aspect respectively correspond to the first aspect and any implementation of the first aspect. For technical effects corresponding to the fifth aspect and any implementation of the fifth aspect, refer to technical effects corresponding to the first aspect and any implementation of the first aspect. Details are not described herein again.

### BRIEF DESCRIPTION OF DRAWINGS

FIG. 1 is an example schematic diagram of a hardware structure of an electronic device;
FIG. 2 is an example schematic diagram of a software structure of an electronic device;
FIG. 3A is an example schematic diagram of a principle of interface display;
FIG. 3B is an example schematic diagram of module interaction in an interface display process;
FIG. 4 is an example schematic diagram of display of a conventional TE signal and a high-frequency TE signal;
FIG. 5A-FIG. 6 are example schematic diagrams of interaction of functional modules;
FIG. 7A-FIG. 7F are example timing diagrams in an interface display process; and
FIG. 8A-FIG. 8B are example schematic timing diagrams of adjustment periods and a penalty period.

### DESCRIPTION OF EMBODIMENTS

The technical solutions in the embodiments of this application are clearly and completely described below with reference to the accompanying drawings in the embodiments of this application. Clearly, the described embodiments are some rather than all of the embodiments of this application. Based on embodiments of this application, all other embodiments obtained by a person of ordinary skill in the art without creative efforts fall within the protection scope of this application.

The term "and/or" in this specification is merely an association relationship of associated objects, and indicates that three relationships may exist. For example, A and/or B may indicate the following three cases: Only A exists, both A and B exist, and only B exists.

The terms "first" and "second" in the specification and claims of embodiments of this application are used to distinguish between different objects, but are not used to describe a specific sequence of objects. For example, a first target object and a second target object are used to distinguish between different target objects, but are not used to describe a specific sequence of the target objects.

In the embodiments of this application, words such as "example" or "for example" are used to indicate giving an example, an illustration, or a description. Any embodiment or design solution described as "example" or "for example" in embodiments of this application should not be construed as being more preferred or advantageous than other embodiments or design solutions. Exactly, use of the words such as "an example" or "for example" is intended to present a related concept in a specific manner.

In the descriptions of embodiments of this application, unless otherwise specified, "a plurality of" means two or more. For example, "a plurality of processing units" means two or more processing units, and "a plurality of systems" means two or more systems.

The following explains and describes some terms in the embodiments of this application for ease of understanding by a person skilled in the art.
(1) Frame: refers to a single picture of a smallest unit in interface display. One frame may be understood as one still picture, and quickly and consecutively displaying a plurality of consecutive frames can create an illusion of object movement.

It should be noted that, before a frame is displayed on an interface, processes such as frame drawing and frame composition generally need to be performed.

Frame drawing refers to picture drawing of a display interface. The display interface may include one or more views. Each view may be drawn by a visual control of a view system. Each view includes sub-views. One sub-view corresponds to one widget in the view. For example, one sub-view corresponds to one symbol of a picture view.

Frame composition refers to a process of compositing the one or more drawn views into a display interface.

(2) Vertical scanning (vertical scanning, Vsync): Vertical scanning is a scanning mechanism from top to bottom. In vertical scanning, an electronic device can periodically generate a vertical synchronization signal. The vertical synchronization signal may include a software Vsync signal. The software Vsync signal can trigger frame drawing and frame composition of the electronic device.

Specifically, the software Vsync signal may include a VsyncAPP signal and a VsyncSF signal. The VsyncAPP signal is used to trigger a frame drawing procedure. That is, after an application of the electronic device receives the VsyncAPP signal, frame drawing can be performed. The VsyncSF signal is used to trigger a frame composition procedure. That is, after an image composition system (SurfaceFlinger) of the electronic device receives the VsyncSF signal, frame composition can be performed on a frame on which frame drawing has been performed.

(3) A tearing effect (tearing effect, TE) signal: A TE signal is a signal output by a timing controller of the electronic device and is used to prevent tearing when a picture is refreshed in an image display process. The TE signal may be understood as a vertical synchronization signal generated by hardware. The TE signal may be configured based on a screen refresh rate. For example, when the screen refresh rate is 60 Hz, a period of the TE signal may be 16.6 ms. To be specific, the terminal device generates one control signal at an interval of 16.6 ms to periodically trigger the TE signal.

For example, when the electronic device is ready to refresh a next frame of image, the electronic device generates a TE signal; and after the electronic device detects a rising edge (that is, a high level) of the TE signal, a display of the electronic device starts displaying the next frame of image.

It may be understood that the electronic device can preset a time interval between the VsyncAPP signal, the VsyncSF signal, and the TE signal. That is, the electronic device can generate the VsyncSF signal after generating the VsyncAPP signal for a period of time, and generate the TE signal after generating the VsyncSF signal for a period of time.

The display method provided in the embodiments of this application can be applied to an electronic device. Optionally, the electronic device in this embodiment of this application may be a mobile phone with a display function, an action camera (GoPro), a digital camera, a tablet computer, a handheld computer, a vehicle-mounted device, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, and the like. A specific form of the electronic device is not specially limited in the embodiments of this application.

To better understand the embodiments of this application, the following describes a structure of the electronic device in the embodiments of this application.

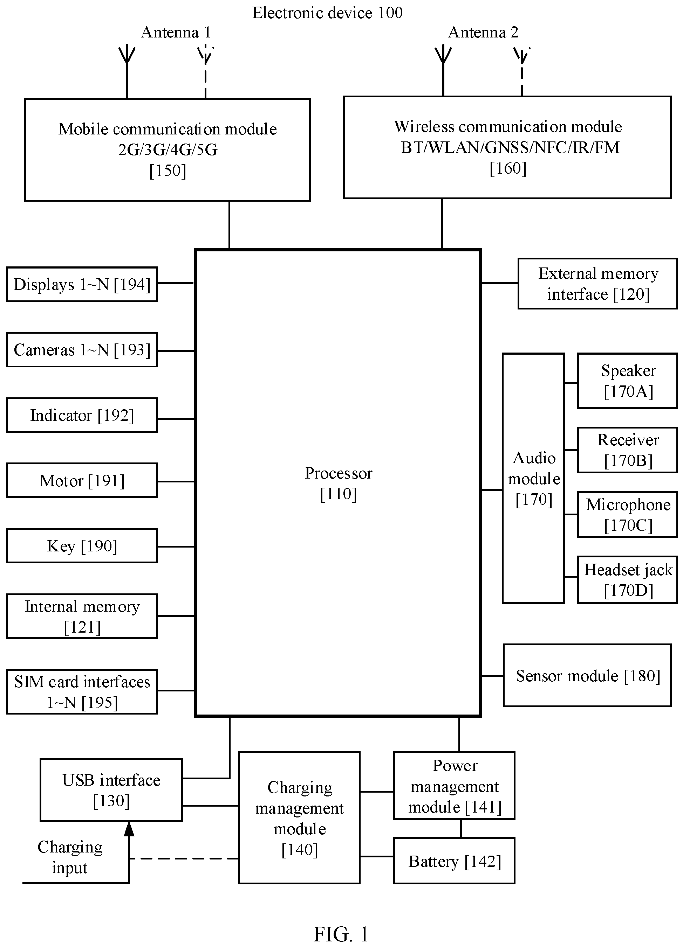

FIG. 1 is a schematic diagram of a structure of an electronic device 100. Optionally, the electronic device 100 may be a terminal, or may be referred to as a terminal device. The terminal may be a device with a display function such as a cellular phone (cellular phone) or a tablet computer (pad). This is not limited in this application.

It should be understood that the electronic device 100 shown in FIG. 1 is merely an example of the electronic device, and the electronic device 100 may have more or fewer components than those shown in the figure, may combine two or more components, or may have different component configurations. The various components shown in FIG. 1 may be implemented in hardware, software, or a combination of hardware and software including one or more signal processing and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, and a subscriber identity module (subscriber identification module, SIM) card interface 195, and the like. The sensor module 180 may include a pressure sensor, a gyroscope sensor, an acceleration sensor, a temperature sensor, a motion sensor, a barometric pressure sensor, a magnetic sensor, a distance sensor, an optical proximity sensor, a fingerprint sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to control instruction fetching and instruction execution.

A memory may be further disposed in the processor 110, and is configured to store instructions and data. In some embodiments, the memory in the processor 110 is a cache.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover a single or a plurality of communication frequency bands. Different antennas may be further multiplexed to increase antenna utilization. For example, the antenna 1 may be multiplexed as a diversity antenna for a wireless local area network. In some other embodiments, the antenna may be used together with a tuning switch.

The mobile communication module 150 may provide a solution to wireless communication including 2G/3G/4G/5G and the like applied to the electronic device 100. The mobile communication module 150 may include at least one filter, a switch, a power amplifier, a noise amplifier (low noise amplifier, LNA), and the like.

The wireless communication module 160 may provide a solution to wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communications technology.

The electronic device 100 implements a display function through the GPU, the display 194, the application processor, and the like. The GPU is a microprocessor for image processing and is connected to the display 194 and the application processor. The GPU is configured to perform mathematical and geometric calculation, and is configured to render graphics. The processor 110 may include one or more GPUs, and the one or more GPUs execute program instructions to generate or change displayed information.

The display 194 is configured to display an image, display a video, receive a user operation, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes.

The camera 193 is configured to capture a still image or video. An optical image is generated for an object through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal.

The ISP outputs the digital image signal to the DSP for processing. The DSP converts the digital image signal into an image signal in a standard form, for example, RGB or YUV.

The external memory interface 120 may be configured to be connected to an external memory card such as a micro SD card, to expand a storage capability of the electronic device 100. The external memory card communicates with the processor 110 through the external memory interface 120, to implement a data storage function.

The internal memory 121 may be configured to store computer executable program code, and the executable program code includes instructions. The processor 110 executes various functional applications and data processing of the electronic device 100 by running an instruction stored in the internal memory 121, so that the electronic device 100 implements the display method in the embodiments of this application. The internal memory 121 may include a program storage area and a data storage area. The program storage area may store an operating system, an application required by at least one function (for example, a sound playing function and an image playing function), and the like. The data storage area may store data (such as audio data and a phone book) and the like created during use of the electronic device 100. In addition, the internal storage 121 may include a high-speed random access memory, and may further include a nonvolatile memory, for example, at least one magnetic disk storage device, a flash storage device, or a universal flash storage (universal flash storage, UFS).

The electronic device 100 may implement an audio function such as music playing or recording by using the audio module 170, the speaker 170A, the telephone receiver 170B, the microphone 170C, the headset jack 170D, the application processor, and the like.

The pressure sensor is configured to sense a pressure signal, and may convert a pressure signal into an electrical signal. In some embodiments, the pressure sensor may be disposed on the display 194. The electronic device 100 may calculate a touch position based on a detected signal of the pressure sensor.

The touch sensor is also referred to as a "touch panel". The touch sensor may be disposed on the display 194. The touch sensor and the display 194 constitute a touchscreen, which is also referred to as a "touch control screen". The touch sensor is configured to detect a touch operation performed on or near the touch sensor. The touch sensor may transfer a detected touch operation to the application processor to determine a type of a touch event.

A software system of the electronic device 100 may use a layered architecture, an event-driven architecture, a micro core architecture, a micro service architecture, or a cloud architecture. In this embodiment of this application, an Android system with a layered architecture is used as an example to describe a software structure of the electronic device 100.

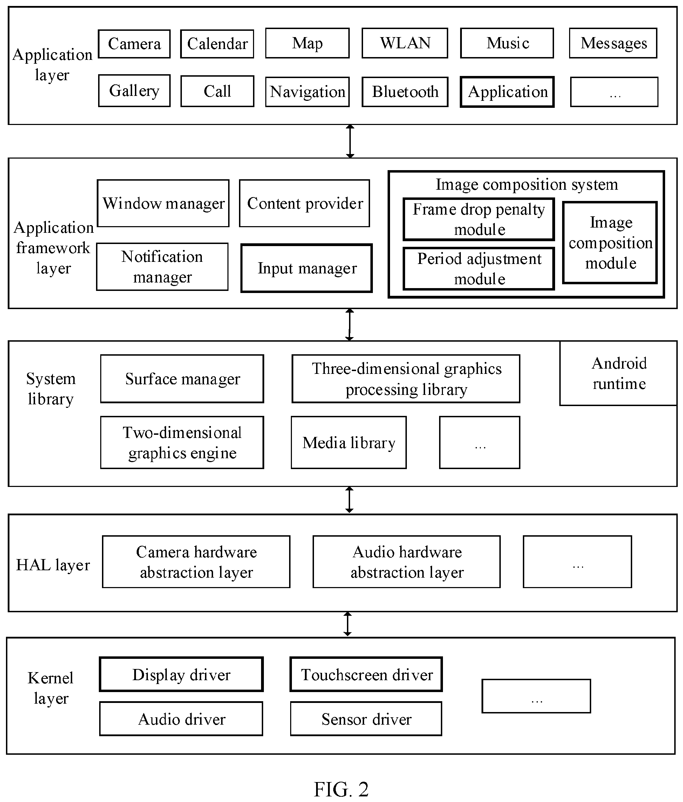

FIG. 2 is a block diagram of a software structure of an electronic device 100 according to an embodiment of this application.

In the layered architecture of the electronic device 100, software is divided into several layers, and each layer has a clear role and task. The layers communicate with each other through a software interface. In some embodiments, an Android system is divided into five layers: an application layer, an application framework layer, an Android runtime (Android runtime) and a system library, a hardware abstraction layer (hardware abstraction layer, HAL), and a kernel layer from top to bottom.

The application program layer may include a series of application packages.

As shown in FIG. 2, the application packages may include Camera, Gallery, a third-party application with a camera function, and the like. For example, the application packages may include applications such as Camera, Gallery, Calendar, Phone, Map, Navigation, WLAN, Bluetooth, Music, Videos, and Messages.

The application framework layer provides an application programming interface (Application Programming Interface, API) and a programming framework for applications in the application layer, including various components and services to support developers' Android development. The application framework layer includes some predefined functions.

As shown in FIG. 2, the application framework layer may include a window manager, a content provider, a view system, a resource manager, a notification manager, and the like.

The window manager is configured to manage a window program. The window manager may obtain a size of a display, determine whether there is a status bar, lock the screen, take a screenshot, and the like.

The content provider is configured to store and obtain data, and enable the data to be accessible by an application. The data may include a video, an image, audio, calls that are made and answered, a browsing history and bookmarks, a phone book, and the like.

The view system includes visual controls such as a control for displaying a text and a control for display a picture. The view system may be configured to create an application. A display interface may include one or more views. For example, a display interface including a Messages notification icon may include a view for displaying text and a view for displaying a picture.

The resource manager provides various resources such as a localized string, an icon, a picture, a layout file, and a video file for the application.

The notification manager enables an application to display notification information in the status bar, and the notification information may be configured to convey a notification-type message and may automatically disappear after a short stay without requiring user interaction. For example, the notification manager is configured to notify download completion, provide a message reminder, and the like. The notification manager may alternatively be a notification that appears in the status bar at the top of the system in a form of a graph or scroll bar text, for example, a notification of an application running in the background, or a notification that appears on a screen in a form of a dialog window. For example, text information is prompted in the status bar, an alert tone is produced, the electronic device vibrates, or an indicator light blinks.

The application framework layer further includes an input manager and an image composition system.

The input manager is configured to manage programs input to the device. For example, the input manager may be an input system that can determine input operations such as a mouse click operation, a keyboard input operation, and a touch sliding operation.

The image composition system includes an image composition module, a frame drop penalty module, and a period adjustment module. The image composition module is configured to control frame composition and generate a vertical synchronization signal. The frame drop penalty module is configured to punitively adjust a finger track delay when a frame drop is detected, so as to avoid consecutive frame drops. The period adjustment module is configured to periodically adjust a finger track delay, so as to reduce a finger track delay in a process in which the user operates the screen, and improve smoothness of picture display.

The Android Runtime includes a kernel library and a virtual machine. The Android Runtime is responsible for scheduling and management of the Android system.

The kernel library includes two parts: functional functions that need to be invoked by a java language, and a kernel library of Android.

The application layer and the application framework layer run on the virtual machine. The virtual machine executes java files at the application program layer and the application framework layer as binary files. The virtual machine is configured to perform functions such as lifecycle management of an object, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports various commonly used audio, playback and recording in a video format, still image files, and the like. The media library may support a plurality of audio and video coding formats, such as MPEG4, H.264, MP3, AAC, AMR, JPG, and PNG.

The three-dimensional graphics processing library is used to implement three-dimensional graphics drawing, image rendering, composition, layer processing, and the like.

The 2D graphics engine is a graphics engine for 2D graphics.

The HAL layer is an interface layer located between an operating system kernel and a hardware circuit. The HAL layer includes but is not limited to a camera HAL module and an audio HAL module. The camera HAL module is configured to process an image stream, and the audio HAL module is configured to process an audio stream (for example, perform processing such as noise reduction and directional enhancement on the audio stream).

The kernel layer is a layer between hardware and software. The kernel layer includes at least a display driver, an audio driver, a touchscreen driver, a sensor driver, and the like.

The hardware includes at least a processor, a display, a touch sensor, and the like.

It may be understood that the layers in the software structure shown in FIG. 2 and the components included in the layers do not constitute a specific limitation on the electronic device 100. In some other embodiments of this application, the electronic device 100 may include more or fewer layers than those shown in the figure, and each layer may include more or fewer components. This is not limited in this application.

It may be understood that, to implement the display method in the embodiments of this application, the electronic device includes corresponding hardware and/or software modules for performing various functions. Algorithm steps in the examples described with reference to the embodiments disclosed in this specification can be implemented in this application in a form of hardware or a combination of hardware and computer software. Whether a function is performed by hardware or by driving hardware by using computer software depends on particular applications and design constraints of the technical solutions. A person of skill in the art may use different methods to implement the described functions with reference to embodiments for each particular application, but it should not be considered that the implementation goes beyond the scope of this application.

The following describes an application scenario of interface display provided in the embodiments of this application. In this scenario, an example in which the electronic device is a mobile phone is used for description.

As the user's experience requirements on mobile phone performance become higher and higher, an interface display technology of the mobile phone is increasingly improved. In a process of using the mobile phone, the user generally needs to perform various operations on the mobile phone, such as browsing a webpage, playing a game, and watching a video. When the user performs an operation on the screen, the mobile phone can display an image corresponding to the user operation on the screen based on the user's operation.

For example, when using the mobile phone to browse a webpage, the user can refresh content displayed on the screen by swiping the screen. The mobile phone displays the refreshed content on the screen in response to the user's operation of swiping the screen.

When using the mobile phone to playing a game, the user can control a game character's actions by swiping the screen. The mobile phone displays an image corresponding to the game character's actions on the screen in response to the user's operation of swiping the screen.

When using the mobile phone to watch a video, the user can adjust video progress by swiping the screen. The mobile phone displays a corresponding video image on the screen in response to the user's operation of swiping the screen.

The following describes in detail a processing procedure of the electronic device in a process from the user performing an operation on the screen to an image corresponding to the user operation being displayed on the screen.

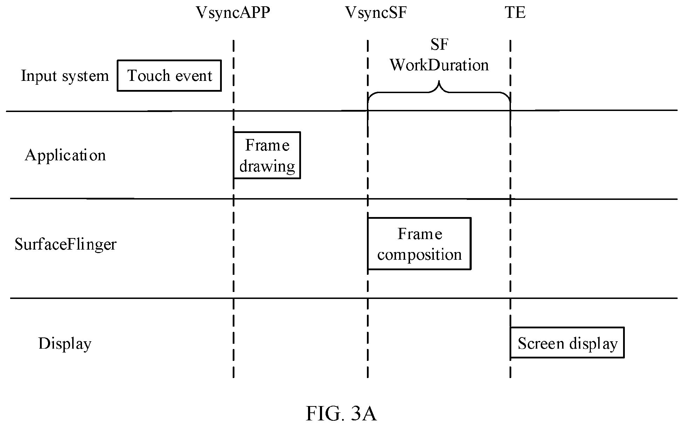

FIG. 3A is an example schematic diagram of a principle of interface display. As shown in FIG. 3A, when the user performs a touch operation on the mobile phone, the touchscreen captures the touch operation and generates a touch event. The touchscreen transfers the touch event to the input system. The input system processes the touch event, converts the touch event into a touch event that can be understood by the application layer, and transfers the touch event to a corresponding application.

When receiving a VsyncApp signal, the application performs frame drawing based on the received touch event. After completing frame drawing, the application sends the drawn frame to the SurfaceFlinger. The frame drawn by the application may be an interface image frame of the application.

It may be understood that in a process in which the application performs frame drawing, the application may store interface content in a buffer (buffer), and the buffer is created by the application for convenience of data processing and transmission. When sending the drawn frame to the SurfaceFlinger, the application may send the buffer to the SurfaceFlinger.

When receiving the VsyncSF signal, the SurfaceFlinger performs frame composition based on the drawn frame sent by the application, and sends the composited frame to the display after the SurfaceFlinger completes frame composition. A frame composited by the SurfaceFlinger may be a display image frame of the electronic device.

It may be understood that, when performing frame composition, the SurfaceFlinger may perform frame composition based on one or more drawn frames. For example, when performing frame composition, the SurfaceFlinger may composite an interface image frame, a time view, a battery level view, a signal strength view, or the like that is drawn by the application into a display image frame.

When a TE signal arrives, the display displays the composited frame on the screen of the mobile phone.

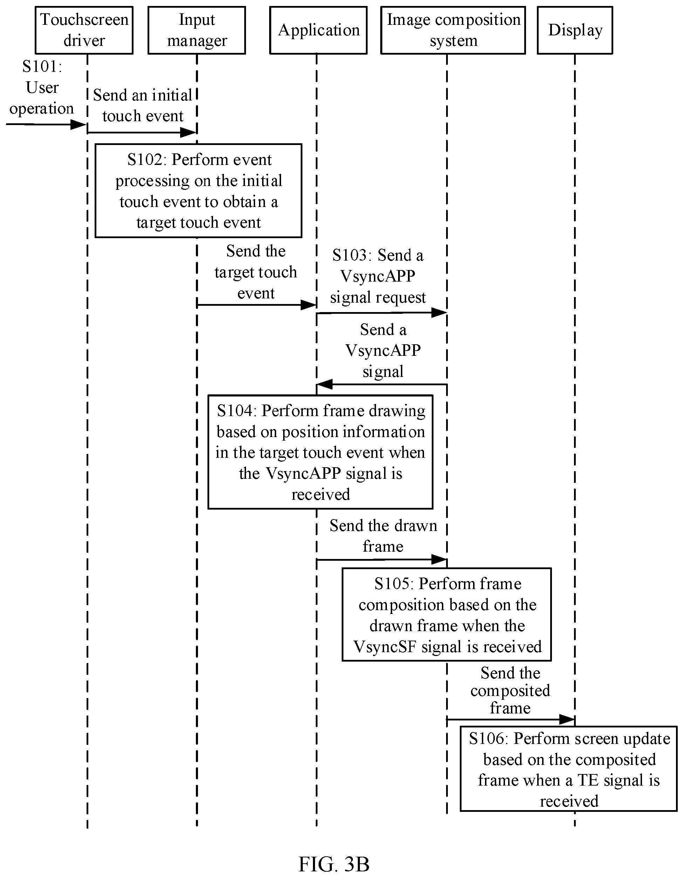

The following describes a procedure of interface display in detail with reference to a specific scenario. FIG. 3B is an example schematic diagram of module interaction in an interface display process.

As shown in FIG. 3B, the procedure of interface display provided in this embodiment of this application may specifically include the following steps:
S101: A touchscreen driver responds to a user operation, and sends an initial touch event to the input manager.

In this embodiment of this application, the user operation may be a user's operation of swiping a screen.

The initial touch event may be a touch event generated by the touchscreen driver based on the user operation.

After the user touches the screen, when the touch sensor in the electronic device receives the touch operation, the touchscreen driver processes the touch operation to generate the initial touch event. The initial touch event may include information such as touch coordinates, touch force, and a touch operation timestamp. After generating the initial touch event, the touchscreen driver may send the initial touch event to the input manager through the kernel layer. For a related processing procedure in which the touchscreen driver generates the initial touch event, reference may be made to the conventional technology. Details are not described herein.

S102: The input manager processes the initial touch event to obtain a target touch event, and sends the target touch event to the application.

The target touch event may be a touch event that can be understood by the application layer.

The input manager processes the received initial touch event, converts the initial touch event into a target touch event that can be understood by the application layer, and sends the target touch event to the application. For a related procedure in which the input manager processes the initial touch event, reference may be made to the conventional technology. Details are not described herein.

S103: After receiving the target touch event sent by the input manager, the application sends a VsyncAPP signal request to the image composition system. After receiving the VsyncAPP signal request, the image composition system sends a VsyncAPP signal to the application.

After receiving the target touch event, the application may send the VsyncAPP signal request to the image composition system. After receiving the VsyncAPP signal, the image composition system waits for the VsyncAPP signal, and when receiving the VsyncAPP signal, the image composition system sends the VsyncAPP signal to the application.

For example, it is assumed that the application sends a VsyncAPP signal request to the image composition system at Moment a, and the image composition system may send a first VsyncAPP signal received after Moment a to the application.

S104: When receiving a VsyncAPP signal, the application performs frame drawing based on position information in the target touch event, and sends the drawn frame to the image composition system after frame drawing is completed.

The application performs frame drawing based on the position information in the target touch event at a moment at which the VsyncAPP signal is received. Frame drawing may be understood as application interface drawing, frame image drawing, or the like. In this embodiment of this application, the foregoing expression manners have the same meaning, that is, the foregoing expression manners can all be represented as performing drawing on an interface image frame of the application.

For a related processing procedure in which the application performs frame drawing, reference may be made to the conventional technology. Details are not described herein.

S105: When receiving a VsyncSF signal, the image composition system performs frame composition based on the drawn frame, and sends the composited frame to the display after frame composition is completed.

The image composition system performs frame composition based on the drawn frame at a moment at which the VsyncSF signal is received. For a related processing procedure in which the image composition system performs frame composition, reference may be made to the conventional technology. Details are not described herein.

S106: When receiving a TE signal, the display performs screen update based on the composited frame.

At a moment at which the TE signal is received, the display performs screen update based on the composited frame to display an interface on the display.

Still referring to FIG. 3A, in a process from the user performing an operation on the screen to an image corresponding to the user operation being displayed on the screen, a time interval between the image composition system receiving the VsyncSF signal and the display receiving the TE signal is SF WorkDuration. That is, a start moment of the SF WorkDuration is a moment at which the image composition system receives the VsyncSF signal, and an end moment of the SF WorkDuration is a moment at which the display receives the TE signal.

During the SF WorkDuration, the image composition system performs frame composition. It may be understood that a process in which the image composition system performs frame composition also causes time-consumption. However, due to factors such as a CPU frequency and an amount of composition content, the time-consumption in the frame composition process fluctuates.

In a process of displaying an interface, the electronic device may set the SF WorkDuration based on a composition time-consumption requirement of the SurfaceFlinger.

If the SF WorkDuration is set to be too short, the image composition system may not complete frame composition at an end moment of the SF WorkDuration, and thus the composited frame cannot be displayed on the screen when the display receives the TE signal, and then a frame drop occurs. As a result, the mobile phone cannot respond to the user operation in time, resulting in lag and unsmoothness of a screen picture.

If the SF WorkDuration is set to be long enough, before the SF WorkDuration ends, the image composition system can complete frame composition, that is, the composited frame can be normally displayed on the screen when the display receives the TE signal. However, if the SF WorkDuration is set to be excessively long, there is significant idle time consumption after the image composition system completes frame composition, which may intensify a finger track delay and reduce finger track of the mobile phone, thereby affecting user experience.

In addition, in an interface display process, each frame corresponds to one expected TE signal, and the expected TE signal is temporarily referred to as an expected TE point. That is, the electronic device displays a corresponding frame at an arrival moment of an expected TE point. However, if frame composition is not completed at the arrival moment of the expected TE point, the frame cannot be displayed at the arrival moment of the expected TE point, and the frame can only be displayed at an arrival moment of a next TE signal of the expected TE point. In this case, if a refresh rate of the TE signal is low and a period of the TE signal is long, that is, if a time interval between the expected TE point and the next TE signal is long, a picture lag occurs.

To resolve the foregoing technical problem, an embodiment of this application provides a display method. In this method, the electronic device can increase a refresh rate of the TE signal, that is, the TE signal of the electronic device is set to a high-frequency TE signal. In this way, in a scenario of a high-frequency TE signal, the electronic device can set an adjustment period for the SF WorkDuration, and dynamically adjust the SF WorkDuration at an end of each adjustment period. Therefore, in the interface display process, the image composition system can perform frame composition based on the dynamically adjusted SF WorkDuration. In addition, in the scenario of the high-frequency TE signal, the electronic device can further set a penalty period for the SF WorkDuration, the electronic device starts timing of the penalty period when a frame drop occurs, and sets the SF WorkDuration to a default value in the penalty period.

In this way, in the interface display process, the electronic device can periodically and dynamically adjust the SF WorkDuration in the scenario of the high-frequency TE signal and adjust SF WorkDuration back to the default value in time when a frame drop occurs, so as to avoid consecutive frame drops while reducing the finger track delay, thereby increasing smoothness of picture display and improving user experience.

The following describes in detail the scenario of the high-frequency TE signal in the display method in this embodiment of this application.

"High frequency" in the high-frequency TE signal means that a frequency of the TE signal exceeds a screen refresh rate, that is, a frequency of the high-frequency TE signal exceeds the screen refresh rate. Generally, a frequency of the TE signal is the same as the screen refresh rate.

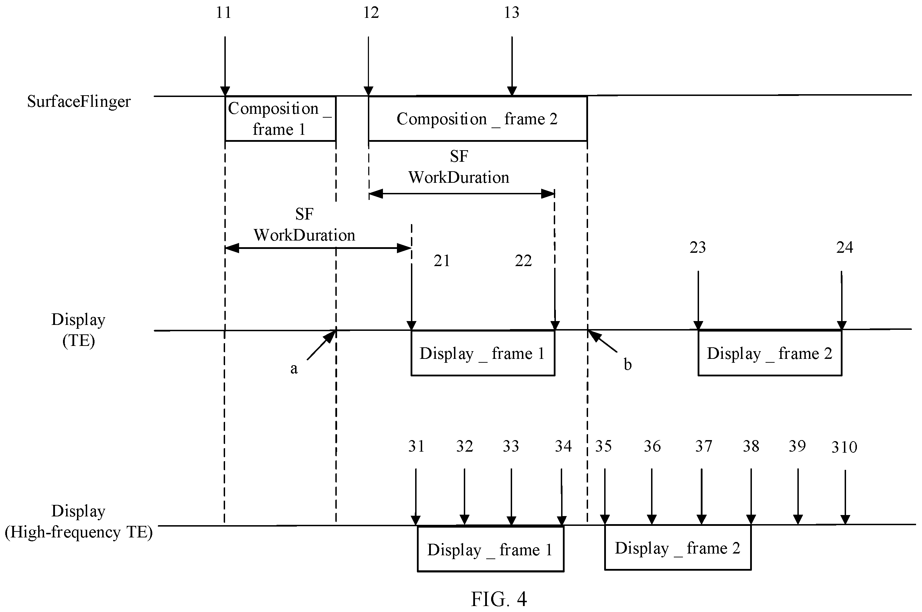

FIG. 4 is an example schematic diagram of display of a conventional TE signal and a high-frequency TE signal. As shown in FIG. 4, the screen refresh rate is 120 Hz (hertz), a frequency of a conventional TE signal is also 120 Hz, and then the frequency of the high-frequency TE signal may be 360 Hz. In a display process, expected TE points corresponding to a frame 1 are a conventional TE signal 21 and a high-frequency TE signal 31, and expected TE points corresponding to a frame 2 are a conventional TE signal 22 and a high-frequency TE signal 34.

Referring to FIG. 4, a process in which the electronic device composites and displays the frame 1 specifically includes the following steps:
When receiving a VsyncSF signal 11, the SurfaceFlinger starts performing frame composition on the frame 1, and completes frame composition at Moment a. The display receives the composited frame at Moment a, and when receiving the conventional TE signal 21, the display starts displaying the frame 1. Alternatively, when receiving the high-frequency TE signal 31, the display starts displaying the frame 1.

Because the SurfaceFlinger completes composition of the frame 1 at Moment a, that is, composition time-consumption of the frame 1 is less than the SF WorkDuration, the frame 1 can be displayed at the arrival moment of the expected TE point (the conventional TE signal 21 or the high-frequency TE signal 31).

Still referring to FIG. 4, a process in which the electronic device composites and displays the frame 2 specifically includes the following steps:
When receiving a VsyncSF signal 12, the SurfaceFlinger starts performing frame composition on the frame 2, and completes frame composition at Moment b. The display receives the composited frame at Moment b, but does not receive the composited frame when receiving the conventional TE signal 22 or the high-frequency TE signal 34. That is, the display cannot display the frame 2 when receiving the expected TE point (the conventional TE signal 22 or the high-frequency TE signal 34). In this case, the frame 2 may be referred to as a late frame, that is, an arrival moment of the frame 2 is later than the arrival moment of the expected TE point.

Because the SurfaceFlinger completes composition of the frame 2 at Moment b, that is, composition time-consumption of the frame 2 is greater than the SF WorkDuration, the frame 2 needs to be displayed at an arrival moment of the next TE signal (the conventional TE signal 22 or the high-frequency TE signal 34) of the expected TE point.

After receiving the composited frame at Moment b, the display waits for a conventional TE signal 23 or a high-frequency TE signal 35, and displays the frame 2 when receiving the conventional TE signal 23 or the high-frequency TE signal 35. However, a period of the conventional TE signal is greater than a period of the high-frequency TE signal, that is, an arrival moment of the conventional TE signal 22 is later than an arrival moment of the high-frequency TE signal 34. Therefore, in the scenario of the high-frequency TE signal, the frame 2 can be displayed more quickly.

Therefore, in the scenario of the high-frequency TE signal, the display can display a late frame more quickly, enabling a quicker response to the user operation, reducing a finger track delay in a process in which the user operates the screen, and improving user experience.

In this embodiment of this application, a procedure in which the electronic device sets the TE signal to the high-frequency TE signal may include: The image composition system sends a high-frequency TE enable request to the display, and after receiving the high-frequency TE enable request, the display sets the high-frequency TE and notifies the image composition system that the high-frequency TE has been enabled. For a related processing procedure in which the display sets the high-frequency TE, reference may be made to the conventional technology. Details are not described herein.

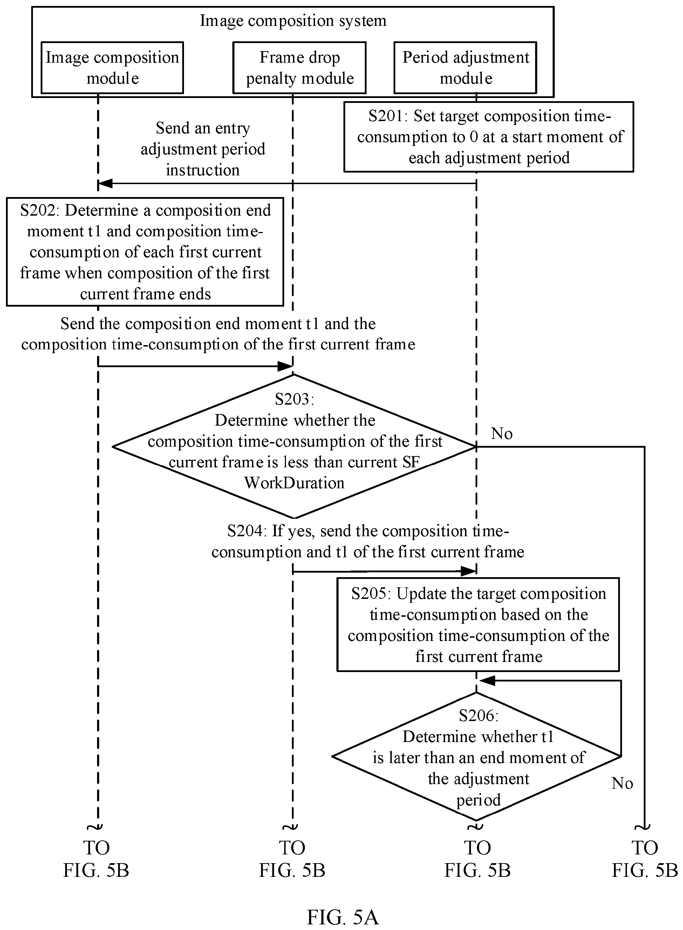

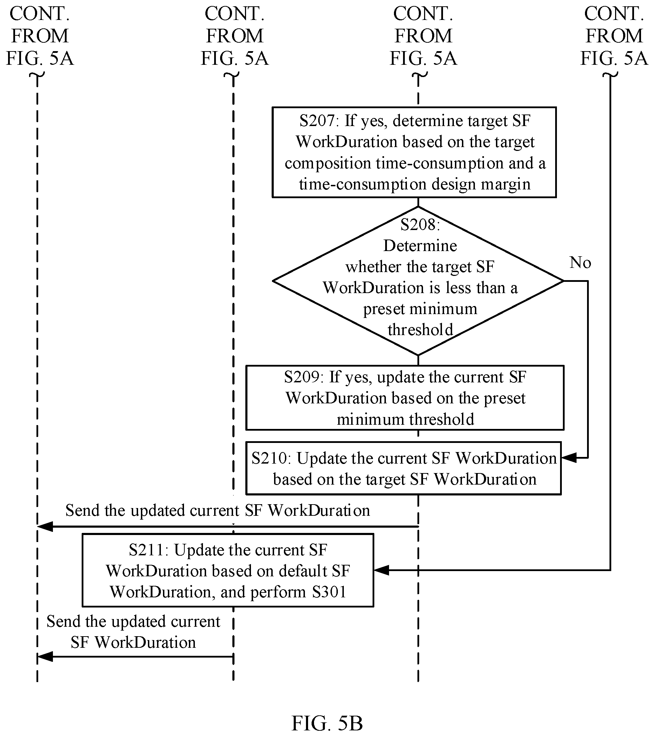

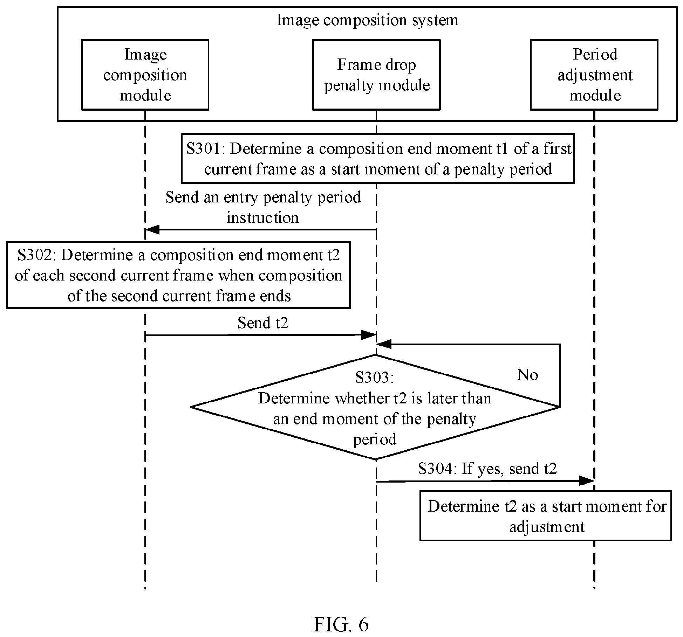

The following describes in detail a specific procedure of adjusting the SF WorkDuration in the display method in this embodiment of this application by using a specific example. FIG. 5A-FIG. 6 are example schematic diagrams of interaction of functional modules.

In this embodiment of this application, the SF WorkDuration is adjusted in the scenario of the high-frequency TE signal. It should be noted that, in this embodiment of this application, the SF WorkDuration is adjusted in a process in which the user swipes the screen, and if the user leaves the screen, adjustment of the SF WorkDuration stops.

Referring to FIG. 5A-FIG. 6, the procedure of adjusting the SF WorkDuration in this embodiment of this application specifically includes the following steps:
S201: The period adjustment module sets target composition time-consumption to 0 at a start moment of each adjustment period, and sends an entry adjustment period instruction to the image composition module.

In an adjustment period, the SF WorkDuration remains unchanged, and the image composition system performs frame composition based on the SF WorkDuration. After the adjustment period ends, the SF WorkDuration is adjusted to enter a next adjustment period. In the next adjustment period, the image composition system performs frame composition based on the adjusted SF WorkDuration.

For example, period duration of the adjustment period may be set to 200 ms (milliseconds). It should be noted that the period duration of the adjustment period may be configured as needed and is not limited in this embodiment of this application.

It may be understood that, that the image composition system performs frame composition based on the SF WorkDuration may be: The image composition module in the image composition system determines a trigger moment of a VsyncSF signal based on the SF WorkDuration and an expected TE point corresponding to a frame, and sends a VsyncSF signal request to a Vsync generation module in the image composition system; the Vsync generation module in the image composition system generates a VsyncSF signal at the trigger moment of the VsyncSF signal based on the VsyncSF signal request, and returns the VsyncSF signal to the image composition module in the image composition system; and the image composition module in the image composition system performs frame composition when receiving the VsyncSF signal. Correspondingly, processing procedures in which the image composition system performs frame composition based on the adjusted SF WorkDuration are the same.

A start moment of a 1st adjustment period may be a composition end moment at which the image composition system performs frame composition for the first time after the user touches the screen.

If the user does not leave the screen and a penalty period has not been entered, a next adjustment period can be entered after a previous adjustment period ends. In this case, a start moment of the next adjustment period may be a composition end moment of a 1st frame after the previous adjustment period ends.

If the user does not leave the screen but the penalty period has been entered, the next adjustment period can be entered after the previous adjustment period ends. In this case, the start moment of the next adjustment period may be a composition end moment of a 1st frame after the penalty period ends.

The target composition time-consumption may be a target value of composition time-consumption in the adjustment period. The entry adjustment period instruction may be an instruction for entering an adjustment period.

The period adjustment module may set the target composition time-consumption to 0 at a start moment of each adjustment period, and sends an entry adjustment period instruction to the image composition module at the start moment of each adjustment period.

In an optional implementation, the target composition time-consumption may be set to a non-zero fixed value, and the fixed value may be, for example, a composition time-consumption threshold.

S202: After the image composition module receives the entry adjustment period instruction, when composition of a first current frame ends, the image composition module determines a composition end moment of the first current frame and composition time-consumption of the first current frame, and sends the composition end moment of the first current frame and the composition time-consumption of the first current frame to the frame drop penalty module.

In the adjustment period, processes such as frame drawing, frame composition, and screen update are not affected. That is, in the adjustment period, the application performs frame drawing when receiving the VsyncAPP signal, the image composition system performs frame composition when receiving the VsyncSF signal, and the display performs screen update when receiving the TE signal.

In the adjustment period, the image composition system may receive a plurality of VsyncSF signals, that is, the image composition system may perform a plurality of frame composition processes. When each frame composition ends, a composition end moment and composition time-consumption of each frame can be determined.

The first current frame may be any frame in the adjustment period. The composition time-consumption refers to time-consumption generated by a frame composition process. It may be understood that composition time-consumption of different frames may be different.

In the adjustment period, when composition of each first current frame ends, the image composition module can determine a composition end moment of each first current frame and composition time-consumption of each first current frame, and sends the composition end moment of each first current frame and the composition time-consumption of each first current frame to the frame drop penalty module.

S203: The frame drop penalty module determines whether the composition time-consumption of the first current frame is less than current SF WorkDuration; and if yes, performs S204; or if no, performs S211.

The current SF WorkDuration may be SF WorkDuration in a current adjustment period. That is, in the adjustment period, frame composition is performed based on the current SF WorkDuration.

It should be noted that, in the 1st adjustment period, the current SF WorkDuration is a default value. In each adjustment period after the 1st adjustment period, the current SF WorkDuration in each adjustment period is the adjusted SF WorkDuration when the previous adjustment period ends.

In the adjustment period, after receiving composition time-consumption of each first current frame, the frame drop penalty module determines whether the composition time-consumption of each first current frame is greater than the current SF WorkDuration.

If the composition time-consumption of each first current frame is less than the current SF WorkDuration, the composition time-consumption and the composition end moment of each first current frame can be sent to the period adjustment module.

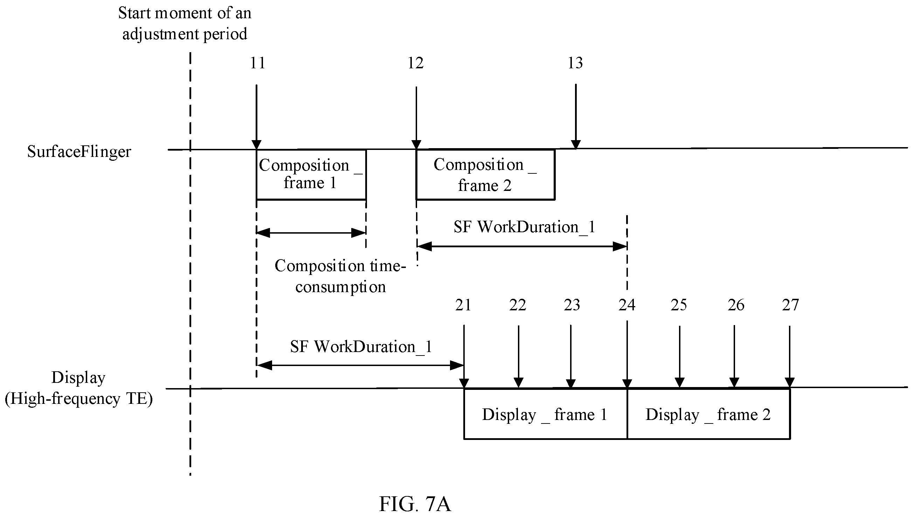

Referring to FIG. 7A, in the adjustment period (that is, after the start moment of the adjustment period), the image composition system composites the frame 1 when receiving a VsyncSF signal 11; and the display displays the frame 1 when receiving a high-frequency TE signal 21. A time interval between the VsyncSF signal 11 and the high-frequency TE signal 21 is SF WorkDuration_1.

It can be learned from FIG. 7A that the composition time-consumption of the frame 1 is less than the SF WorkDuration_1. Therefore, after composition of the frame 1 ends, the adjustment period does not change, and the SF WorkDuration also does not change.

Still referring to FIG. 7A, the image composition system composites the frame 2 when receiving a VsyncSF signal 12; and the display displays the frame 2 when receiving a high-frequency TE signal 24. A time interval between the VsyncSF signal 12 and the high-frequency TE signal 24 is the SF WorkDuration_1.

If composition time-consumption of a first current frame is greater than the current SF WorkDuration, which indicates that the first current frame cannot be displayed at the expected TE point, that is, if a frame drop occurs in the first current frame, the current SF WorkDuration can be updated to default SF WorkDuration, so that the image composition system performs frame combination based on the default SF WorkDuration, thereby avoiding consecutive frame drops.

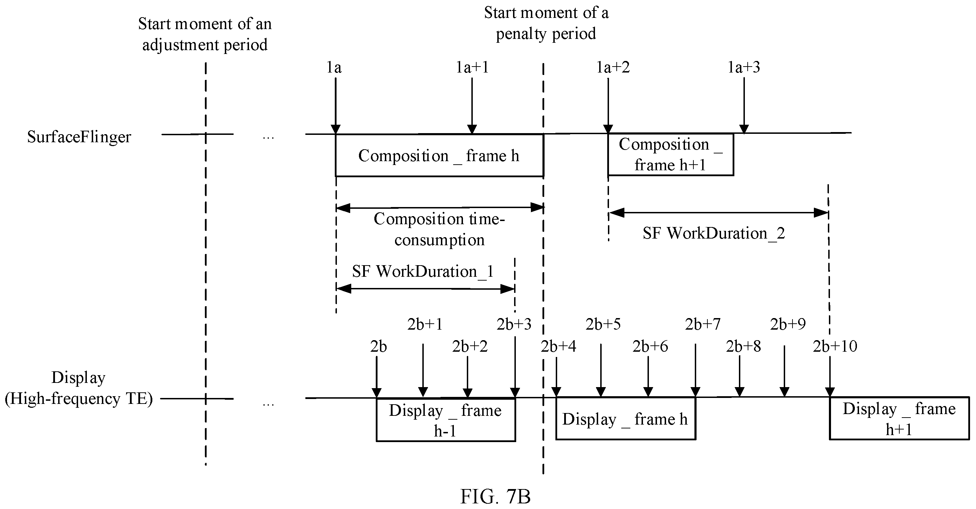

Referring to FIG. 7B, in the adjustment period (that is, after the start moment of the adjustment period), the image composition system composites a frame h when receiving a VsyncSF signal 1a; and the display displays the frame h when receiving a high-frequency TE signal 2b+4. A time interval between the VsyncSF signal 1a and the high-frequency TE signal 2b+4 is greater than the SF WorkDuration_1.

It can be learned from FIG. 7B that a time interval between the VsyncSF signal 1a and a high-frequency TE signal 2b+3 is the SF WorkDuration_1, that is, composition time-consumption of the frame h is greater than the SF WorkDuration_1. In this case, the SF WorkDuration_1 (the current SF WorkDuration) can be updated to a SF WorkDuration_2 (the default SF WorkDuration).

Still referring to FIG. 7B, in the penalty period (that is, after a start moment of the penalty period), the image composition system composites a frame h+1 when receiving a VsyncSF signal 1a+2; and the display displays the frame h+1 when receiving a high-frequency TE signal 2b+10. A time interval between the VsyncSF signal 1a+2 and the high-frequency TE signal 2b+10 is the SF WorkDuration_2.

S204: The frame drop penalty module sends the composition end moment of the first current frame and the composition time-consumption of the first current frame to the period adjustment module.

When the composition time-consumption of the first current frame is less than the current SF WorkDuration, it can be determined that the first current frame can be displayed at the expected TE point, and no frame drop occurs. In this case, the frame drop penalty module can send the composition end moment of the first current frame and the composition time-consumption of the first current frame to the period adjustment module.

In the adjustment period, the frame drop penalty module can send a composition end moment and composition time-consumption of each first current frame whose composition time-consumption is less than the current SF WorkDuration to the period adjustment module.

S205: The period adjustment module updates the target composition time-consumption based on the composition time-consumption of the first current frame.

After receiving the composition time-consumption of the first current frame, the period adjustment module can update the target composition time-consumption based on the composition time-consumption of each first current frame in the adjustment period.

When the composition time-consumption of the first current frame is greater than the target composition time-consumption, the target composition time-consumption is updated to the composition time-consumption of the first current frame. When the composition time-consumption of the first current frame is less than the target composition time-consumption, the target composition time-consumption remains unchanged.

In an optional implementation, when the target composition time-consumption is a non-zero fixed value, updating the target composition time-consumption based on the composition time-consumption of the first current frame may include: comparing composition time-consumption of each first current frame with the target composition time-consumption, determining any frame in the first current frame whose composition time-consumption is greater than the target composition time-consumption, and determining composition time-consumption of the frame as the target composition time-consumption.

In another optional implementation, when the target composition time-consumption is a non-zero fixed value, updating the target composition time-consumption based on the composition time-consumption of the first current frame may alternatively include: comparing composition time-consumption of each first current frame and the target composition time-consumption, and determining an average value of composition time-consumption of first current frames whose composition time-consumption are greater than the target composition time-consumption as the target composition time-consumption.

S206: The period adjustment module determines whether the composition end moment of the first current frame is later than the end moment of the adjustment period; and if yes, performs S207; or if no, performs S206.

The end moment of the adjustment period may be determined based on the period duration of the adjustment period and the start moment of the adjustment period.

After updating the target composition time-consumption, the period adjustment module can determine whether the composition end moment of the first current frame is later than the end moment of the adjustment period.

In the adjustment period, if a composition end moment of each first current frame is not later than the end moment of the adjustment period, which indicates that the adjustment period has not ended, it may wait for the image composition system to perform frame composition of a next second current frame until the composition end moment of the first current frame received by the period adjustment module is later than the end moment of the adjustment period. It may be understood that the current SF WorkDuration remains unchanged in the adjustment period.

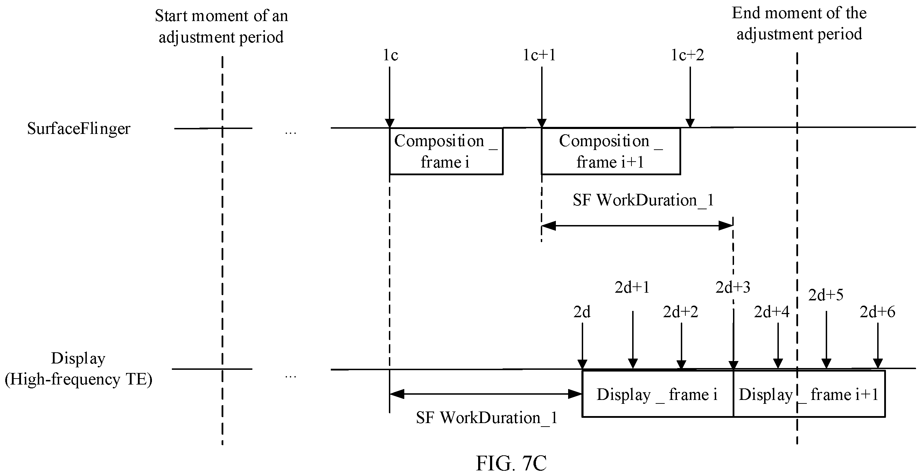

Referring to FIG. 7C, in the adjustment period (that is, after the start moment of the adjustment period), the image composition system composites a frame i when receiving a VsyncSF signal 1c; and the display displays the frame i when receiving a high-frequency TE signal 2d. A time interval between the VsyncSF signal 1c and the high-frequency TE signal 2d is the SF WorkDuration_1.

It can be learned from FIG. 7C that if a composition end moment of the frame i is not later than the end moment of the adjustment period, the adjustment period has not ended. Before the adjustment period ends, the SF WorkDuration_1 remains unchanged.

Still referring to FIG. 7C, the image composition system composites a frame i+1 when receiving a VsyncSF signal 1c+1; and the display displays the frame i+1 when receiving a high-frequency TE signal 2d+3. A time interval between the VsyncSF signal 1c+1 and the high-frequency TE signal 2d+3 is the SF WorkDuration_1.

In the adjustment period, if a composition end moment of a first current frame is later than the end moment of the adjustment period, which indicates that the adjustment period ends before composition of the first current frame ends, or ends at the composition end moment of the first current frame, the period adjustment module can update the current SF WorkDuration, that is, the image composition system can perform frame composition based on the updated current SF WorkDuration.

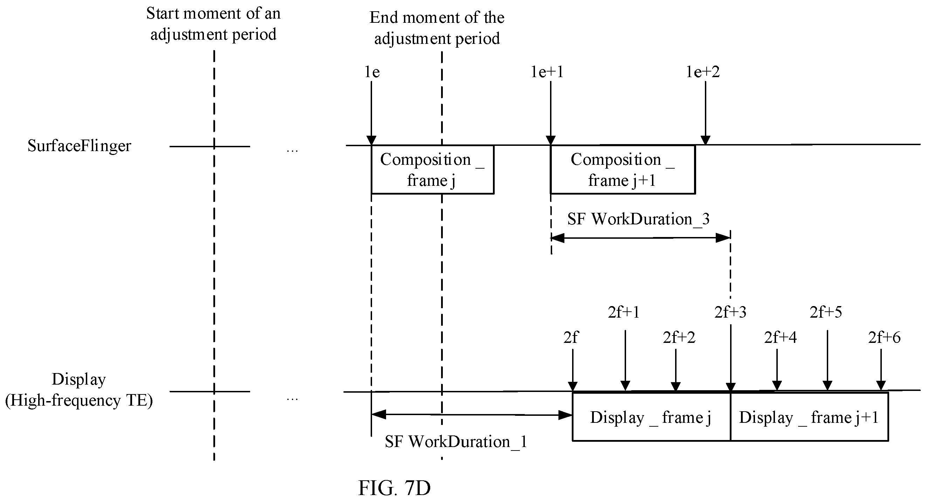

Referring to FIG. 7D, in the adjustment period (that is, after the start moment of the adjustment period), the image composition system composites a frame j when receiving a VsyncSF signal 1e; and the display displays the frame j when receiving a high-frequency TE signal 2f. A time interval between the VsyncSF signal 1e and the high-frequency TE signal 2f is the SF WorkDuration_1.

It can be learned from FIG. 7D that a composition end moment of the frame j is later than the end moment of the adjustment period, that is, when the image composition system composites a frame j+1, the adjustment period has ended. When the adjustment period ends, the SF WorkDuration_1 is updated to SF WorkDuration_3.

Still referring to FIG. 7D, after the adjustment period ends (that is, after the end moment of the adjustment period), the image composition system composites the frame j+1 when receiving a VsyncSF signal 1e+1; and the display displays the frame j+1 when receiving a high-frequency TE signal 2f+3. A time interval between the VsyncSF signal le+1 and the high-frequency TE signal 2f+3 is the SF WorkDuration_3.

S207: The period adjustment module determines target SF WorkDuration based on the target composition time-consumption and a time-consumption design margin.

The time-consumption design margin may be a preset value of idle time-consumption, that is, a value of a time consumed on waiting for an expected TE point after frame composition ends.

When the composition end moment of the first current frame is later than the end moment of the adjustment period, the period adjustment module can determine the target SF WorkDuration based on the target composition time-consumption and the time-consumption design margin.

In this embodiment of this application, the target SF WorkDuration may be equal to a sum of the target composition time-consumption and the time-consumption design margin.

S208: The period adjustment module determines whether the target SF WorkDuration is less than a preset minimum threshold; and if yes, performs S209; or if no, performs S210.

The preset minimum threshold may be a value of preset minimum SF WorkDuration.

After determining the target SF WorkDuration, the period adjustment module determines whether the target SF WorkDuration is less than the preset minimum threshold.

If the target SF WorkDuration is less than the preset minimum threshold, the current SF WorkDuration can be updated based on the preset minimum threshold, that is, the current SF WorkDuration is updated to the preset minimum threshold.

If the target SF WorkDuration is greater than the preset minimum threshold, the current SF WorkDuration can be updated based on the target SF WorkDuration, that is, the current SF WorkDuration is updated to the target SF WorkDuration.

S209: The period adjustment module updates the current SF WorkDuration based on the preset minimum threshold, and sends the updated current SF WorkDuration to the image composition module.

Referring to FIG. 7D, after the adjustment period ends, the SF WorkDuration_1 (that is, the current SF WorkDuration) is updated to the SF WorkDuration_3 (that is, the preset minimum threshold).

After the image composition module receives the updated current SF WorkDuration, the image composition system can perform frame composition based on the updated current SF WorkDuration.

S210: The period adjustment module updates the current SF WorkDuration based on the target SF WorkDuration, and sends the updated current SF WorkDuration to the image composition module.

Still referring to FIG. 7D, after the adjustment period ends, the SF WorkDuration_1 (that is, the current SF WorkDuration) is updated to the SF WorkDuration_3 (that is, the target SF WorkDuration).

S211: The frame drop penalty module updates the current SF WorkDuration based on the default SF WorkDuration, and performs S301. After updating the current SF WorkDuration based on the default SF WorkDuration, the frame drop penalty module sends the updated current SF WorkDuration to the image composition module.

The default SF WorkDuration may be a default value of the preset SF WorkDuration.

When the composition time-consumption of the first current frame is greater than the current SF WorkDuration, which indicates that the first current frame cannot be displayed at the expected TE point, that is, when a frame drop occurs in the first current frame, the current SF WorkDuration can be updated to the default SF WorkDuration, and the composition end moment of the first current frame is determined as the start moment of the penalty period.

Still referring to FIG. 7B, if the composition time-consumption of the frame h is greater than the SF WorkDuration_1, after composition of the frame h ends, the SF WorkDuration_1 (that is, the current SF WorkDuration) is updated to the SF WorkDuration_2 (that is, the default SF WorkDuration), the penalty period is entered, and the composition end moment of the frame h is determined as the start moment of the penalty period.

S301: The frame drop penalty module determines the composition end moment of the first current frame as the start moment of the penalty period, and sends an entry penalty period instruction to the image composition module.

The entry penalty period instruction may be an instruction for entering the penalty period.

When a frame drop occurs in the adjustment period, the adjustment period is ended and the penalty period is entered. In the penalty period, the default SF WorkDuration remains unchanged. After the penalty period ends, the next adjustment period can be entered.

In an adjustment period, if a penalty period is not entered, a next adjustment period is entered after the adjustment period ends. In an adjustment period, if a penalty period is entered, the adjustment period ends, and a next adjustment period is entered until the penalty period ends.

For example, duration of the penalty period may be set to 1s (second). It should be noted that the duration of the penalty period may be configured based on a requirement, which is not limited in this embodiment of this application.

S302: When composition of the second current frame ends, the image composition module determines a composition end moment of the second current frame, and sends the composition end moment of the second current frame to the frame drop penalty module.

In the penalty period, processes such as frame drawing, frame composition, and screen update are not affected. That is, in the penalty period, the application performs frame drawing when receiving the VsyncAPP signal, the image composition system performs frame composition when receiving the VsyncSF signal, and the display performs screen update when receiving the TE signal.

In the penalty period, the image composition system can receive a plurality of VsyncSF signals, that is, the image composition system can perform a plurality of frame composition processes. When each frame composition ends, a composition end moment of each frame can be determined.

The second current frame may be any frame in the penalty period.

In the penalty period, when composition of each second current frame ends, the image composition module can determine a composition end moment of each second current frame, and sends the composition end moment of each second current frame to the frame drop penalty module.

S303: The frame drop penalty module determines whether the composition end moment of the second current frame is later than the end moment of the penalty period; and if yes, performs S304; or if no, performs S303.

The end moment of the penalty period can be determined based on the duration of the penalty period and the start moment of the penalty period.

When receiving the composition end moment of the second current frame, the frame drop penalty module can determine whether the composition end moment of the second current frame is later than the end moment of the penalty period.

In the penalty period, if a composition end moment of each second current frame is not later than the end moment of the penalty period, which indicates that the penalty period has not ended, it may wait for the image composition system to perform frame composition of a next second current frame until the composition end moment of the second current frame received by the frame drop penalty module is later than the end moment of the penalty period. It may be understood that the default SF WorkDuration remains unchanged in the penalty period.

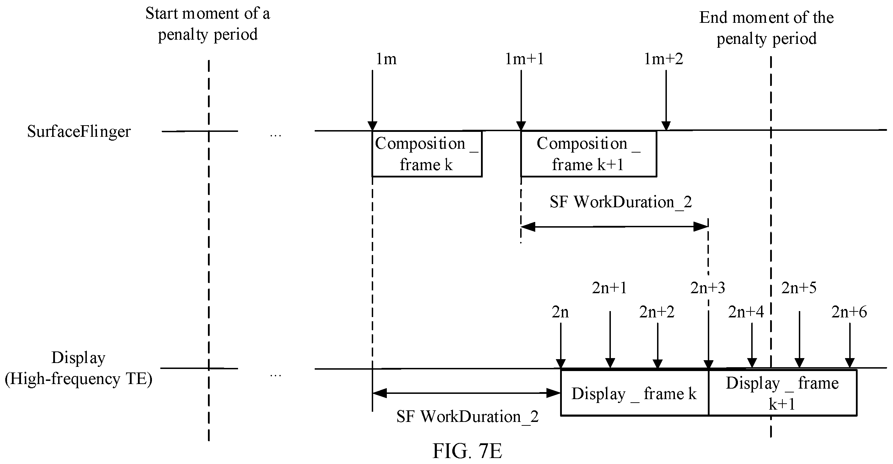

Referring to FIG. 7E, in the penalty period (that is, after the start moment of the penalty period), the image composition system composites a frame k when receiving a VsyncSF signal 1m; and the display displays the frame k when receiving a high-frequency TE signal 2n. A time interval between the VsyncSF signal 1m and the high-frequency TE signal 2n is the SF WorkDuration_2.

It can be learned from FIG. 7E that, if the composition end moment of the frame k is not later than the end moment of the penalty period, the penalty period has not ended. Before the penalty period ends, the SF WorkDuration_2 remains unchanged.

Still referring to FIG. 7E, the image composition system composites a frame k+1 when receiving a VsyncSF signal 1m+1; and the display displays the frame k+1 when receiving a high-frequency TE signal 2n+3. A time interval between the VsyncSF signal 1m+1 and the high-frequency TE signal 2n+3 is the SF WorkDuration_2.

In the penalty period, if a composition end moment of a second current frame is later than the end moment of the penalty period, which indicates that the penalty period ends before composition of the second current frame ends, or ends at the composition end moment of the second current frame, the frame drop penalty module can send the composition end moment of the second current frame to the period adjustment module.

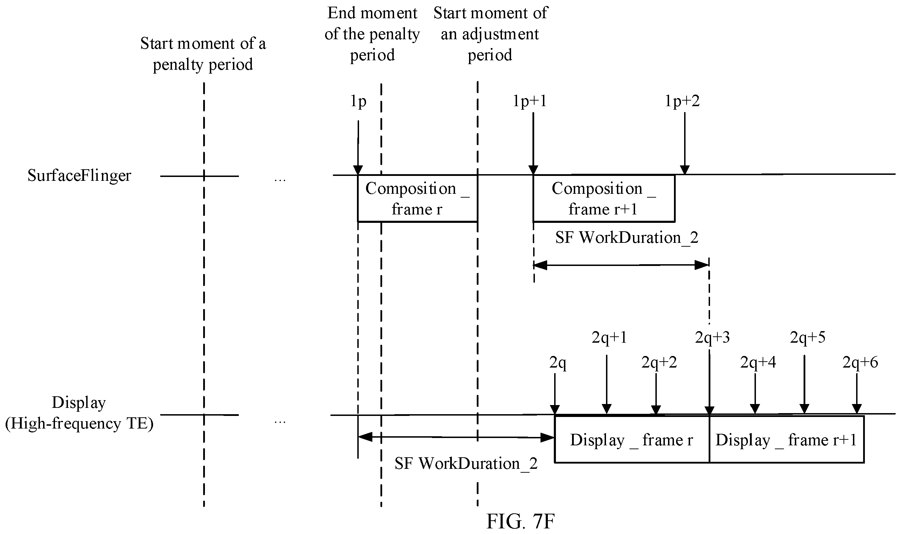

Referring to FIG. 7F, in the penalty period (that is, after the start moment of the penalty period), the image composition system composites a frame r when receiving a VsyncSF signal 1p; and the display displays the frame r when receiving a high-frequency TE signal 2q. A time interval between the VsyncSF signal 1p and the high-frequency TE signal 2q is the SF WorkDuration_2.

It can be learned from FIG. 7F that a composition end moment of the frame r is later than the end moment of the penalty period, that is, when the image composition system composites a frame r+1, the penalty period has ended. After the penalty period ends, the composition end moment of the frame r is determined as a start moment of the next adjustment period, that is, the next adjustment period is entered. In the next adjustment period, the SF WorkDuration_2 remains unchanged.

Still referring to FIG. 7F, the image composition system composites a frame r+1 when receiving a VsyncSF signal 1p+1; and the display displays the frame r+1 when receiving a high-frequency TE signal 2q+3. A time interval between the VsyncSF signal 1p+1 and the high-frequency TE signal 2q+3 is the SF WorkDuration_2.

S304: The frame drop penalty module sends the composition end moment of the second current frame to the period adjustment module, and the period adjustment module determines the composition end moment of the second current frame as the start moment of the adjustment period.

When the frame drop penalty module determines that the composition end moment of the second current frame is later than the end moment of the penalty period, the frame drop penalty module sends the composition end moment of the second current frame to the period adjustment module. In this case, the adjustment period is entered, and the period adjustment module determines the composition end moment of the second current frame as a start moment of the next adjustment period.

When the period adjustment module determines the composition end moment of the second current frame as the start moment of the adjustment period, the next adjustment period is entered, and the period adjustment module returns to perform S201.

It may be understood that, when the next adjustment period is entered after the penalty period ends, in the adjustment period, a value of the current SF WorkDuration is a value of the default SF WorkDuration.

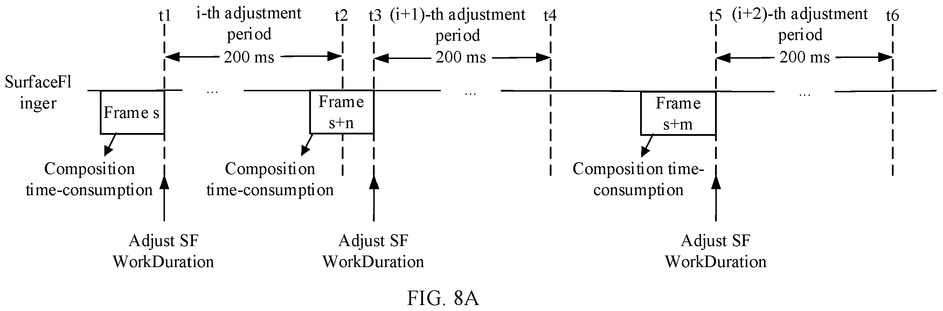

The following describes in detail the adjustment period and the penalty period in the display method in this embodiment of this application by using a specific example. FIG. 8A-FIG. 8B are example schematic timing diagrams of adjustment periods and a penalty period.

Referring to FIG. 8A, the electronic device can enter an i-th adjustment period at a composition end moment (that is, Moment t1) of a frame s, and end the i-th adjustment period at Moment t2. The image composition system can adjust the SF WorkDuration at the composition end moment (that is, Moment t1) of the frame s. In the i-th adjustment period, the image composition system may composite the frames based on the adjusted SF WorkDuration, and composition time-consumption of each frame is less than SF WorkDuration corresponding to the i-th adjustment period.

Because a composition end moment (that is, Moment t3) of a frame s+n is later than an end moment (that is, Moment t2) of the i-th adjustment period, the electronic device can enter the next adjustment period (that is, an (i+1)-th adjustment period) at the composition end moment (that is, Moment t3) of the frame s+n, and end the (i+1)-th adjustment period at Moment t4, and the image composition system can adjust the SF WorkDuration at Moment t3. Similarly, in the (i+1)-th adjustment period, the image composition system can composite the frames based on the adjusted SF WorkDuration, and composition time-consumption of each frame is less than SF WorkDuration corresponding to the (i+1)-th adjustment period.

The electronic device can enter an (i+2)-th adjustment period at a composition end moment (that is, Moment t5) of a 1st frame (that is, a frame s+m) after Moment t4. The image composition system can adjust the SF WorkDuration at Moment t5. As shown in FIG. 8A, in this embodiment of this application, duration of each adjustment period of the electronic device may be 200 ms.

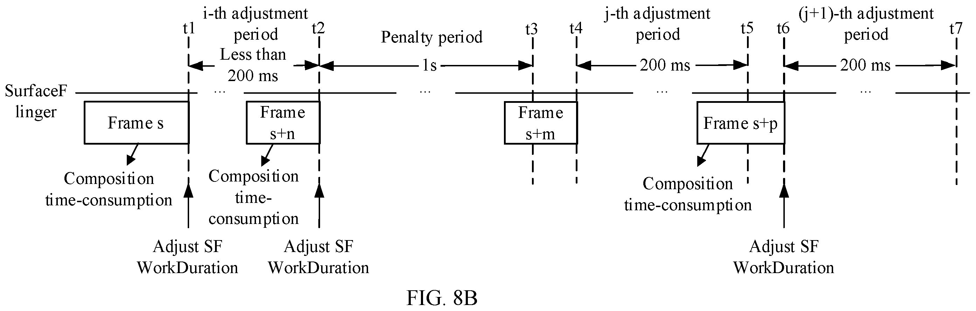

Referring to FIG. 8B, in the i-th adjustment period, when the image composition system composites the frame s, composition time-consumption of the frame s is greater than the SF WorkDuration corresponding to the i-th adjustment period. In this way, the electronic device can end the i-th adjustment period at the composition end moment (that is, Moment t1) of the frame s. That is, the electronic device can end the i-th adjustment period before the end moment of the i-th adjustment period. Therefore, the duration of the i-th adjustment period is less than 200 ms.

The electronic device can enter the penalty period at the composition end moment (that is, Moment t2) of the frame s+n, and end the penalty period at Moment t3. The image composition system can adjust the SF WorkDuration at Moment t2. In the penalty period, the image composition system can composite the frames based on the adjusted SF WorkDuration.

Because a composition end moment (that is, Moment t4) of the frame s+m is later than the end moment (that is, Moment t3) of the penalty period, the electronic device can enter a j-th adjustment period at the composition end moment (that is, Moment t4) of the frame s+m. The SF WorkDuration corresponding to the j-th adjustment period may be the same as SF WorkDuration corresponding to the penalty period. That is, the image composition system does not need to adjust the SF WorkDuration at Moment t4.

Because a composition end moment (that is, Moment t6) of a frame s+p is later than an end moment (that is, Moment t5) of the j-th adjustment period, the electronic device can enter a (j+1)-th adjustment period at Moment t6, and end the (j+1)-th adjustment period at Moment t7. The image composition system can adjust the SF WorkDuration at Moment t6.

An embodiment further provides a computer storage medium. The computer storage medium stores computer instructions. When the computer instructions are run on an electronic device, the electronic device is enabled to perform the foregoing related method steps to implement the display method in the foregoing embodiments.

An embodiment further provides a computer program product. When the computer program product runs on a computer, the computer is enabled to perform the foregoing related steps to implement the display method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the display method in the foregoing method embodiments.

The electronic device (for example, a mobile phone), the computer storage medium, the computer program product, or the chip provided in the embodiments is configured to perform the corresponding method provided above. Therefore, for beneficial effects that can be achieved by the electronic device, the computer storage medium, the computer program product, or the chip, refer to beneficial effects in the corresponding method provided above. Details are not described herein again.

It may be understood by a person skilled in the art from the foregoing descriptions of the implementations that, for convenience and brevity of description, division of the foregoing functional modules is merely used as an example for description. In an actual application, the foregoing functions may be allocated to different functional modules as required for implementation, that is, an internal structure of the apparatus is divided into different functional modules, to complete all or some of the functions described above.

In the several embodiments provided in this application, it should be understood that the disclosed apparatus and methods may be implemented in other manners. For example, the apparatus embodiment described above is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in an electrical form, a mechanical form, or another form.

The foregoing embodiments are merely intended to describe the technical solutions in this application, but not intended to limit this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the scope of the technical solutions in the embodiments of this application.

## Claims

1. A display method, wherein the method comprises:
drawing, by a target application, at least one interface image in response to a movement of a target operation;
determining target duration of a second adjustment period based on composition time-consumption of at least one display frame in a first adjustment period, wherein the second adjustment period is a next adjustment period adjacent to the first adjustment period, and the target duration is a time interval between a display trigger moment and a composition trigger moment of the display frame;
obtaining a first interface image drawn by the target application in the second adjustment period, and determining an arrival moment of an expected tearing effect TE signal of a first display frame corresponding to the first interface image;
determining a frame composition trigger moment corresponding to the first interface image based on the arrival moment of the expected TE signal of the first display frame and the target duration of the second adjustment period;
compositing the first display frame based on the first interface image at the frame composition trigger moment corresponding to the first interface image; and
displaying a plurality of display frames corresponding to the at least one interface image, wherein the plurality of display frames comprise the first display frame.

2. The method according to claim 1, wherein the determining target duration of a second adjustment period based on composition time-consumption of at least one display frame in a first adjustment period comprises:
in the first adjustment period, determining target composition time-consumption corresponding to the first adjustment period based on the composition time-consumption of the at least one display frame in the first adjustment period;
obtaining preset idle time-consumption after the first adjustment period ends, and determining a sum of the target composition time-consumption and the preset idle time-consumption as duration to be adjusted; and
determining the target duration of the second adjustment period based on the duration to be adjusted.

3. The method according to claim 2, wherein the determining target composition time-consumption corresponding to the first adjustment period based on the composition time-consumption of the at least one display frame in the first adjustment period comprises:
setting the target composition time-consumption to an initial value at a start moment of the first adjustment period;
sequentially using each display frame composited in the first adjustment period as a current display frame; and
obtaining composition time-consumption of the current display frame, and updating a value of the target composition time-consumption to the composition time-consumption of the current display frame in a case that the composition time-consumption of the current display frame is greater than the target composition time-consumption.

4. The method according to claim 2, wherein the determining the target duration of the second adjustment period based on the duration to be adjusted comprises:
obtaining first duration; and
determining the duration to be adjusted as the target duration of the second adjustment period in a case that the duration to be adjusted is greater than the first duration; or
determining the first duration as the target duration of the second adjustment period in a case that the duration to be adjusted is less than the first duration.

5. The method according to claim 1, wherein before the determining target duration of a second adjustment period based on composition time-consumption of at least one display frame in a first adjustment period, the method further comprises:
determining target duration of the first adjustment period; and
the determining target duration of a second adjustment period based on composition time-consumption of at least one display frame in a first adjustment period comprises:
determining the target duration of the second adjustment period based on the composition time-consumption of the at least one display frame in the first adjustment period in a case that composition time-consumption of all display frames composited in the first adjustment period is less than the target duration of the first adjustment period.

6. The method according to claim 5, wherein the method further comprises:
determining composition time-consumption of a second display frame in the first adjustment period;
determining target duration corresponding to a penalty period and starting timing of the penalty period in a case that the composition time-consumption of the second display frame is greater than the target duration of the first adjustment period;
obtaining a third interface image drawn by the target application in the penalty period, and determining an arrival moment of an expected TE signal of a third display frame corresponding to the third interface image;
determining a frame composition trigger moment corresponding to the third interface image based on the arrival moment of the expected TE signal of the third display frame and the target duration corresponding to the penalty period;
compositing the third display frame based on the third interface image at the frame composition trigger moment corresponding to the third interface image; and
determining a next adjustment period after the timing of the penalty period ends, wherein target duration of the next adjustment period is second duration.

7. The method according to claim 6, wherein the determining target duration corresponding to a penalty period comprises:
determining the second duration as the target duration corresponding to the penalty period.

8. The method according to claim 6, wherein:
a start moment of the penalty period is a composition end moment of the second display frame.

9. The method according to claim 6, wherein the method further comprises:
determining a composition end moment of the third display frame and an end moment of the penalty period; and
determining the composition end moment of the third display frame as a start moment of the next adjustment period in a case that the composition end moment of the third display frame is later than the end moment of the penalty period.

10. The method according to claim 5, wherein the determining target duration of the first adjustment period comprises:
obtaining second duration in a case that the first adjustment period is a 1st adjustment period; and
determining the second duration as the target duration of the first adjustment period.

11. The method according to claim 1, wherein the method further comprises:
determining a composition end moment of a fourth display frame in the first adjustment period and an end moment of the first adjustment period; and
determining the composition end moment of the fourth display frame as a start moment of the second adjustment period in a case that the composition end moment of the fourth display frame is later than the end moment of the first adjustment period.

12. The method according to any one of claims 1-11, wherein the method is applied to an electronic device, and a frequency of a TE signal of the electronic device is greater than a screen refresh rate of the electronic device.

13. An electronic device, comprising:
one or more processors;
a memory; and
one or more computer programs, wherein the one or more computer programs are stored in the memory, and when the computer programs are executed by the one or more processors, the electronic device is enabled to perform the display method according to any one of claims 1-12.

14. A computer-readable storage medium, comprising a computer program, wherein when the computer program is run on an electronic device, the electronic device is enabled to perform the display method according to any one of claims 1-12.
